(19) Europäisches Patentamt
European Patent Office
Office européen des brevets

(11) **EP 1 433 681 B1**

(12) **EUROPÄISCHE PATENTSCHRIFT**

(45) Veröffentlichungstag und Bekanntmachung des Hinweises auf die Patenterteilung:
**19.10.2011 Patentblatt 2011/42**

(51) Int Cl.:
***B60T 8/17*** *(2006.01)*

(21) Anmeldenummer: **03028386.5**

(22) Anmeldetag: **11.12.2003**

(54) **Verfahren zur Zuspannenergieregelung einer Fahrzeugkombination**

Method for controlling the brake application energy of combined vehicle

Procédé de commande d'énergie d'actionnement de frein des systèmes de freinage de véhicules combinés

(84) Benannte Vertragsstaaten:
**DE FR SE**

(30) Priorität: **23.12.2002 DE 10261547**

(43) Veröffentlichungstag der Anmeldung:
**30.06.2004 Patentblatt 2004/27**

(73) Patentinhaber: **WABCO GmbH**
**30453 Hannover (DE)**

(72) Erfinder:
• **Eckert, Horst**
**31547 Rehburg-Loccum (DE)**

• **Gaulke, Arnd**
**30952 Ronnenberg (DE)**

(74) Vertreter: **Schrödter, Manfred et al**
**WABCO GmbH**
**Postfach 91 12 62**
**30432 Hannover (DE)**

(56) Entgegenhaltungen:
**EP-A- 0 626 297    WO-A-97/03871**
**DE-A1- 19 858 964    DE-C- 4 035 805**
**DE-C- 4 446 358**

EP 1 433 681 B1

**Beschreibung**

Die Erfindung betrifft ein Verfahren zur Zuspannenergieregelung einer Fahrzeugkombination, die ein Zugfahrzeug mit mindestens einer Vorderachse und Hinterachse und ein Anhängefahrzeug mit mindestens einer Anhängeachse aufweist, wobei wenigstens das Zugfahrzeug ein elektronisch geregeltes Bremssystem (EBS) aufweist, das eine Fahrzeugverzögerungsregelung (Z-Regelung) und eine Koppelkraftregelung (KKR) durchführt.

Durch die EP 0 697 314 B1 ist ein Verfahren zur lastabhängigen Bremsdruckregelung einer Fahrzeugkombination aus Zug- und Anhängefahrzeug bekannt, durch das durch geeignete Bremsdruckverteilung auf die Achsen des Zugfahrzeuges und auf das Anhängefahrzeug eine möglichst gleich große Abbremsung von Anhänge- und Zugfahrzeug erreicht werden soll. Hierzu wird anhand eines in einer Zugfahrzeug-Zentralelektronik abgelegten Kennfeldes für einen als Verhältnis von Zugfahrzeug-Gesamtbremsdruck zu Soll-Fahrzeugverzögerung definierten Bezugsfaktor in Abhängigkeit von wenigstens eine Beladungszustandsinformation enthaltenden Zugfahrzeugzustandsdaten und des erfassten momentanen Zugfahrzeugzustandes ein im Normalbereichsband liegender, anfänglicher Bezugsfaktorwert ermittelt, wobei das Kennfeld ein Normalbereichsband von Bezugsfaktorwerten enthält. Es wird ferner ein durch den anfänglichen Bezugsfaktorwert bestimmter Zugfahrzeug-Gesamtbremsdruckwert sowie ein für die gewählte Soll-Fahrzeugverzögerung innerhalb eines vorgegebenen abgelegten Abbremsungsbandes liegender Anhängefahrzeug-Bremsdruck für das Anhängefahrzeug eingestellt. Im weiteren Verlauf des Bremsvorganges wird die Ist-Fahrzeugverzögerung erfasst und bei erkannter Abweichung von der Soll-Fahrzeugverzögerung zunächst der Zugfahrzeug-Gesamtbremsdruck mittels Nachführung des Bezugsfaktorwertes innerhalb des Normalbereichsbandes nachgeregelt. Wenn bei der vorhergehenden Nachführung des Bezugsfaktorwertes dieser einen Grenzpunkt des Normalbereichsbandes erreicht, wird der Bremsdruck für das Anhängefahrzeug innerhalb des vorgegebenen Abbremsungsbandes nachgeführt. Die Nachführung des Bremsdruckes für das Anhängefahrzeug erfolgt solange, bis der Bezugsfaktor für den zu diesem geänderten Anhängefahrzeug-Bremsdruck gehörigen Zugfahrzeug-Gesamtbremsdruck wieder innerhalb des Normalbereichsbandes liegt. Diese durch die EP 0 697 341 B1 bekannte Koppelkraftregelung weist keine von der Fahrzeugverzögerungsregelung abweichende Grenzen auf. Solange sich die Fahrzeugverzögerungsregelung in ihrem Arbeitsbereich befindet, ist auch die Koppelkraftregelung aktiv. Die Gesamtbremsperformance wird nur über das Anhängefahrzeug ausgeregelt, was den Nachteil hat, dass ein vorhandener Temperaturunterschied der Radbremsen zwischen Anhängefahrzeug und Zugfahrzeug durch diese Regelung noch größer wird.

Aus der EP 0 445 575 B1 ist ein Verfahren zur Bremsdruckverteilung auf die Achsen eines Kraftfahrzeugs mit ABS-Druckmittel- bremse bekannt, bei dem eine adaptive Anpassung der Bremsdruckverteilung auf die Achsen des Kraftfahrzeugs, d. h. des Verhältnisses zwischen Vorderachs- und Hinterachs-Bremsdruck, anhand eines Modells durchgeführt wird, bei dem sich dieses Verhältnis ausgehend von einem statischen Druckverhältnis linear mit der Soll-Fahrzeugverzögerung ändert. Das statische Druckverhältnis ist vom Beladungszustand abhängig und wird durch die Bremskräfte eines Anhängefahrzeugs praktisch nicht beeinflusst. Der jeweils aktuelle Wert der Bremsdruckverteilung wird jeweils solange den nachfolgenden Bremsvorgängen zugrundegelegt, bis die überwachte, zwischenachsige Drehzahldifferenz einen vorgegebenen Grenzwert überschreitet, wonach in Abhängigkeit von diesem eine neue Bremsdruckverteilungsfunktion bestimmt wird.

Die Aufgabe der vorliegenden Erfindung besteht darin, ein Verfahren der eingangs genannten Art anzugeben, mit dem eine einseitige Belastung und damit die Gefahr einer Überlastung der Bremsanlage des Anhängefahrzeugs bei Vorliegen von Störgrößen, wie bspw. einer Überladung und/oder heiße Bremsen des Anhängefahrzeuges, vermieden werden.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Durch die Erfindung wird erreicht, dass störgrößenbedingte relative Minderperformance der Bremsanlage einer Fahrzeugkombination nicht nur einseitig vom Anhängefahrzeug ausgeglichen wird, sondern von beiden Teilfahrzeugen gleichermaßen. Durch das erfindungsgemäße Verfahren werden die Bremsen geschont. Die Spitzentemperaturen werden erniedrigt, wodurch sich ein geringerer Bremsverschleiß ergibt. Die Gefahr von Bremsschäden und -ausfällen wird verringert. Es ergibt sich ein gleichmäßigerer Verschleiß der Bremsen zwischen den Teilfahrzeugen.

Die Erfindung soll nachfolgend anhand der beigefügten Zeichnung näher erläutert werden.

Es zeigen

Fig. 1  ein Flussdiagramm des erfindungsgemäßen Verfahrens,

Fig. 2  den Block N 6 aus Fig. 1 in näherer Ausführung,

Fig. 3a, 3b  Diagramme (Kennlinienfelder), die die Abhängigkeit des Zuspannenergie-Niveaus des Zugfahrzeugs (BDN-Z) und des Anhängefahrzeugs (BDN-A) von einem Zuspannenergie-Bezugswert (kappa) und vom Achslastverhältnis (ALV) zeigen - zur Anwendung bei dem Verfahren nach Fig. 1 und 2,

Fig. 4a-4d Darstellungen einer Fahrzeugkombination mit einem Zugfahrzeug und einem Anhängefahrzeug mit zwei Achsen in unterschiedlichen Beladungszuständen unter Angabe des Achslastverhältnisses (ALV), der Achslasten (AL), der Summe der Achslasten der Teilfahrzeuge und der Fahrzeugkombination (SAL-T, SAL-K), der Zuspannenergie-Niveaus (BDN-Z und BDN-A) für das Zugfahrzeug und das Anhängefahrzeug und des Zuspannenergie-Bezugswertes (kappa),

Fig. 5 ein Kennfeld, das die Abhängigkeit des Zuspannenergie-Bezugswertes (kappa) vom Achslastverhältnis (ALV) bei einer herkömmlichen Bandlagenregelung der Koppelkraftregelungsgröße (pmk) bspw. gemäß dem Verfahren nach der EP 0 697 314 B1 darstellt,

Fig. 6 das Kennfeld nach Fig. 5 für zwei Beispiele,

Fig. 7 ein Kennfeld analog Fig. 5 für die herkömmliche Zuspannenergieregelung, das die Abhängigkeit der Verzögerung von der eingesteuerten Zuspannenergie für ein Anhängefahrzeug mit einem vorgeschriebenen Normalbereichsband (Abbremsungsband) wiedergibt, und

Fig. 8 ein Flussdiagramm des erfindungsgemäßen Verfahrens bei Anwendung beim herkömmlichen Verfahren nach Fig. 7.

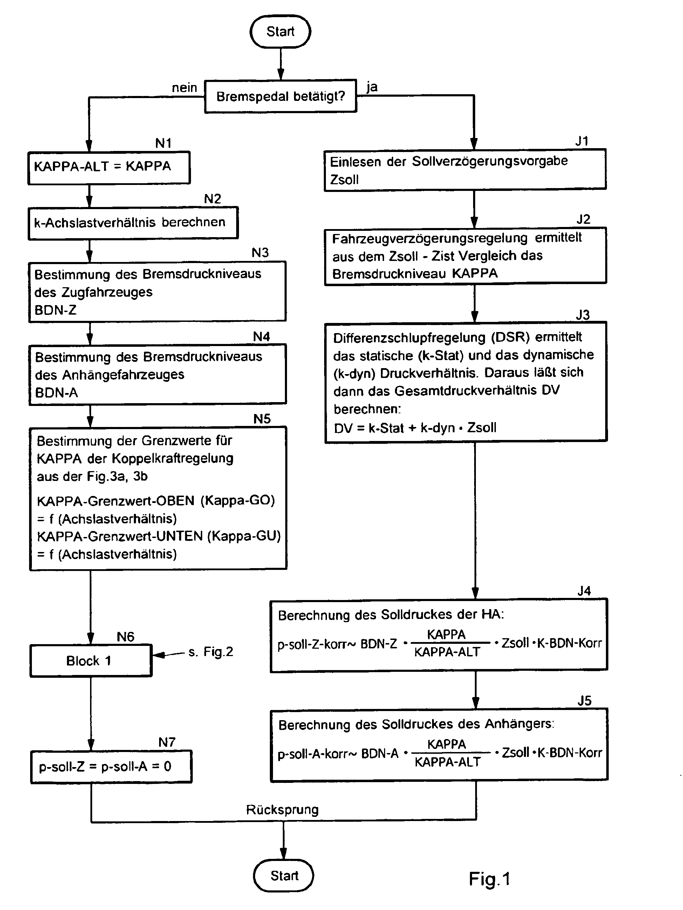

Bei dem in Fig. 1 gezeigten Verfahren zur Zuspannenergieregelung (in der Fig. 1 ist als Zuspannenergie Bremsdruck bzw. Druck angegeben) einer Fahrzeugkombination, die ein mit einem elektronisch geregelten Bremssystem (EBS) ausgestattetes Zugfahrzeug und ein Anhängefahrzeug aufweist, wird nach dem Start in Schritt $S_1$ in einem zweiten Schritt $S_2$ überprüft, ob das Bremspedal betätigt ist bzw. ein Bremswertgebersignal ausgegeben wird.

Falls das Bremspedal betätigt ist, wird gemäß dem rechten Zweig in Schritt J1 ein Verzögerungs-Sollwert $Z_{Soll}$ aus dem Bremswertgebersignal erzeugt und eingelesen. In einem nachfolgenden Schritt J2 wird ein Zuspannenergie-Bezugswert kappa ermittelt. Die Fahrzeugverzögerungsregelung ermittelt den Zuspannenergie-Bezugswert kappa aus einem Vergleich des Verzögerung-Sollwertes $Z_{Soll}$ mit dem Verzögerungs-Istwert $Z_{Ist}$ .

In einem nachfolgenden Schritt J3 ermittelt eine Differenzschlupfregelung DSR der EBS-Anlage das statische Verhältnis zwischen der Vorderachs- und Hinterachszuspannenergie (Zuspannenergieverhältnis) k-stat des Zugfahrzeugs. Dies kann entsprechend einem Algorithmus erfolgen, wie er z. B. in der EP 0 445 575 B1 beschrieben ist. Hierbei bedeutet statisch das Verhältnis bei stehendem Fahrzeug.

Im nachfolgenden Schritt J4 wird der Zuspannenergie-Sollwert des Zugfahrzeuges P-Soll-Z ermittelt aus der Beziehung

$$\text{P-Soll-Z} \sim \text{BDN-Z} \cdot Z_{Soll} \cdot (\text{kappa/kappa-alt})$$

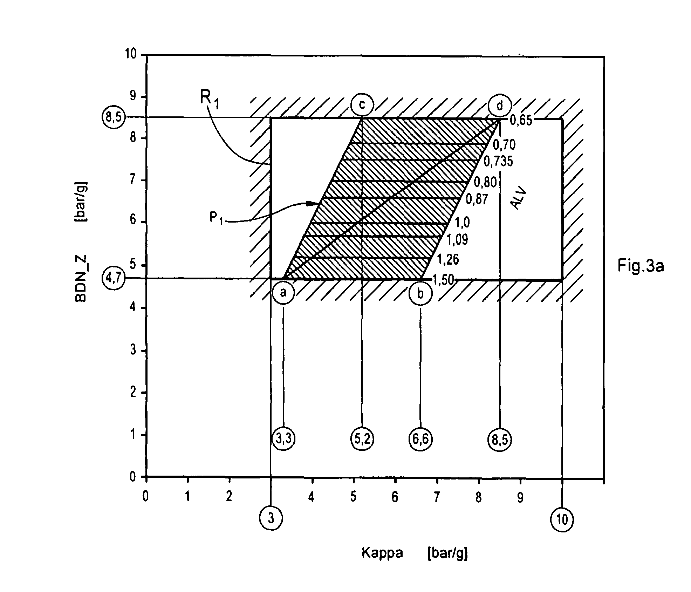

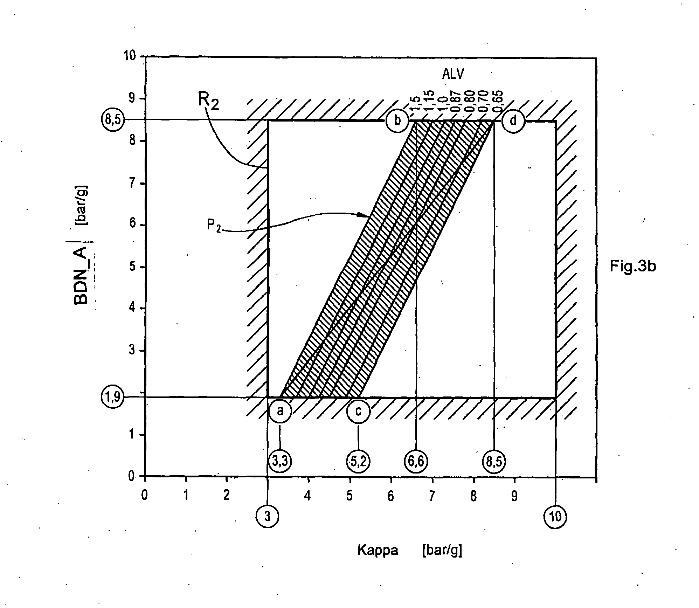

und ggf. mit einem gemäß linkem Zweig des Flussdiagramms ermittelten Korrekturwert k-BDN-korr multipliziert, wenn der Wert von kappa aufgrund einer oder mehrerer Störgrößen aus dem Wertebereich des normalen Arbeitsbereiches, der anhand der Fig. 3a, 3b erlaubt ist, herausläuft, so dass sich ein korrigierter Zuspannenergie-Sollwert für das Zugfahrzeug ergibt zu

$$\text{P-Soll-Z-korr} \sim \text{BDN-Z} \cdot Z_{Soll} \cdot (\text{kappa/kappa-alt}) \cdot$$
$$\text{k-BDN-korr.}$$

In einem Schritt J5 wird anschließend der Zuspannenergie-Sollwert P-Soll-A des Anhängefahrzeuges ermittelt aus der Beziehung

$$\text{P-Soll-A} \sim \text{BDN-A} \cdot Z_{Soll} \cdot (\text{kappa/kappa-alt})$$

und ggf. mit einem gemäß dem linken Zweig des Flussdiagramms ermittelten Korrekturwert k-BDN-korr multipliziert, wenn der Wert von kappa aufgrund einer oder mehrerer Störgrößen aus dem Wertebereich des normalen Arbeitsbereiches, der anhand der Fig. 3a, 3b erlaubt ist, herausläuft, so dass sich ein korrigierter Zuspannenergie-Sollwert für das Anhängefahrzeug ergibt zu

$$P\text{-Soll-A-korr} \sim BDN\text{-}A \cdot Z_{Soll} \cdot (kappa/kappa\text{-}alt) \cdot$$

$$k\text{-BDN-korr}.$$

Falls das Bremspedal nicht betätigt ist, wird gemäß linkem Zweig der Fig. 1 in einem Schritt N1 zunächst der letzte, ggf. gefilterte Zuspannenergie-Bezugswert kappa der Fahrzeugverzögerungsregelung gespeichert als:

$$kappa\text{-}alt = kappa.$$

Im nächsten Schritt N2 wird ein Achslastverhältnis ALV als Produkt eines vorher berechneten Radbremsverhältnisses RBV und eines in Schritt J3 ermittelten statischen Zuspannenergie-Verhältnisses (Druckverhältnisses) k-stat ermittelt. Das Radbremsverhältnis RBV wird als Quotient eines Q-Faktors Q-VA der Vorderachse und eines Q-Faktors Q-HA der Hinterachse des Zugfahrzeugs ermittelt. Diese Q-Faktoren sind als solche bereits aus dem Stand der Technik bekannt. Sie stellen die bezogene Bremskraft am Rad bzw. an der Achse als Kraft pro Druck, d. h. in der Einheit kN/bar dar. Die Q-Faktoren Q-VA und Q-HA der Vorder- und Hinterachse VA, HA werden über die Nennmomente M-BR der verbauten Bremsen in der Dimension Drehmoment pro Druck kNm/bar und dynamischen Reifenradien r-dyn in m berechnet, d. h.

$$Q = \frac{M\text{-}BR}{r\text{-}dyn} \cdot$$

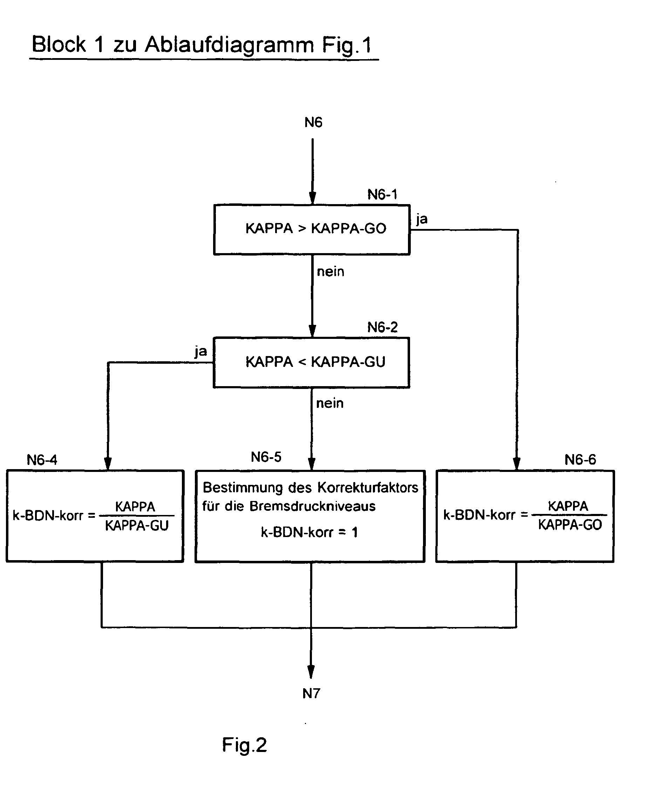

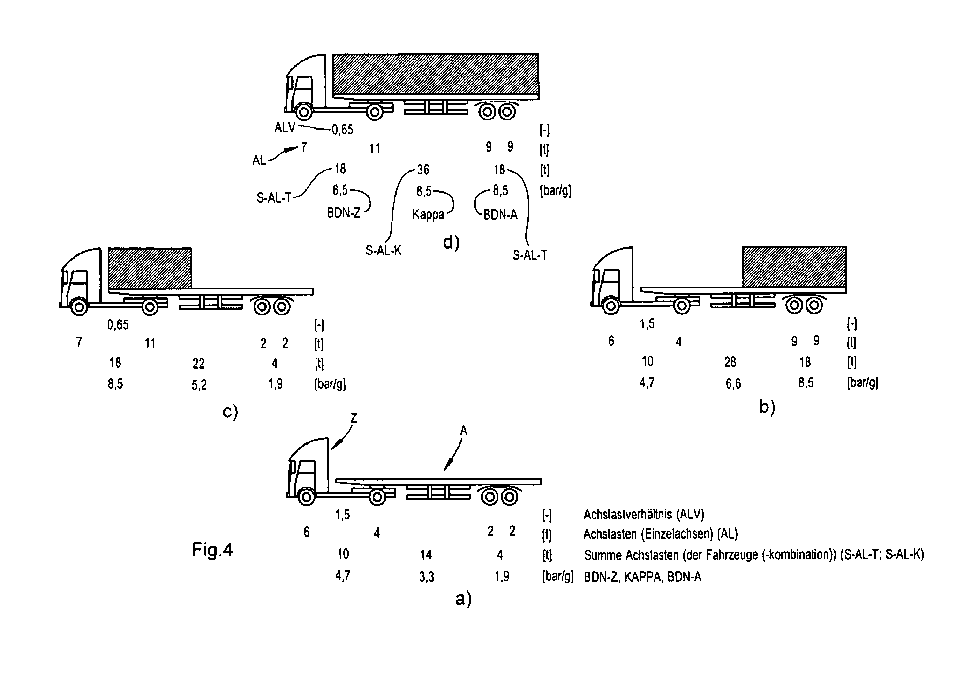

Das Achslastverhältnis ALV kann auch auf andere Weise, bspw. mit Hilfe von Achslastsensoren an der Vorder- und Hinterachse des Zugfahrzeugs ermittelt werden. Es ist auch möglich, das Achslastverhältnis nur mit Hilfe von Achslast-Sensoren von der Hinterachse des Zugfahrzeugs zu ermitteln, da bei einem Zufahrzeug in der Art einer Sattelzugmaschine in der Regel der Krafteinleitungspunkt der Beladung konstant ist und damit die Vorderachslast und die Hinterachslast in einem festen Verhältnis zueinander stehen.
In nachfolgenden Schritten N3 und N4 werden die Zuspannenergie-Niveaus BDN-Z und BDN-A aus den ermittelten Daten für ALV und kappa anhand der Kennlinienfelder nach den Fig. 3a und 3b ermittelt. In einer ungebremsten Phase werden die Zuspannenergie-Sollwerte gemäß Schritt N7 auf Null gesetzt. Danach erfolgt der Rücksprung zum Start.
In Anschluss an Schritt N 4 werden in Schritt N5 die oberen und unteren Grenzwerte kappa-GO und kappa-GU anhand der Kennfelder nach den Fig. 3a, 3b ermittelt. Im nachfolgenden Schritt N6 wird im Block 1 der Fig. 1, der in der Fig. 2 im Einzelnen ausgeführt ist, zur Ermittlung eines Korrekturfaktors k-BDN-korr in einem Schritt N6-1 zunächst überprüft, ob der Zuspannenergie-Bezugswert kappa oberhalb des im Schritt N5 ermittelten oberen Grenzwertes kappa-GO liegt. Falls dies der Fall ist, folgt im Schritt N6-6 eine Normierung, indem ein Korrekturfaktor k-BDN-korr durch Bildung des Quotienten aus dem Zuspannenergie-Bezugswert kappa und diesem oberen Grenzwert kappa-GO ermittelt wird (k-BDN-korr = kappa/kappa-GO). Falls im Schritt N6-1 keine Überschreitung des oberen Grenzwertes festgestellt wird, wird nachfolgend im Schritt N6-2 überprüft, ob der untere im Schritt N5 ermittelte Grenzwert kappa-GU unterschritten wird. Falls dies der Fall ist, wird im Schritt N6-4 entsprechend eine Normierung auf den unteren Grenzwert durchgeführt, indem ein Korrekturfaktor k-BDN-korr durch Bildung des Quotienten aus Zuspannenergie-Bezugswert kappa und dem unteren Grenzwert kappa-GU ermittelt wird (k-BDN-korr = kappa/kappa-GU).
Falls kappa innerhalb des Grenzwertbereiches liegt, wird der Korrekturfaktor k-BDN-korr im Schritt N6-5 auf 1 gesetzt.
Beispielhaft sollen nachfolgend zwei Fälle mit Zahlenbeispiel betrachtet werden, wobei in beiden Fällen keine Störgrößen vorliegen sollen:
In einem ersten Fall A liegt die gesamte Last, wie beispielsweise in Fig. 4c gezeigt, auf dem Zugfahrzeug und in einem zweiten Fall B liegt die gesamte Last auf dem Anhängefahrzeug, wie in Fig. 4b gezeigt. Das Zuspannenergie-Niveau für das Zugfahrzeug BDN-Z ist nur vom Achslastverhältnis ALV abhängig, das in der Fig. 3a als Parameter eingezeichnet ist. Das Zuspannenergie-Niveau BDN-A des Anhängefahrzeugs ist außer vom Achslastverhältnis ALV auch vom Zuspannenergie-Bezugswert kappa abhängig, vgl. Fig. 3b.
Fall A:

$$kappa = \frac{22\ t}{36\ t} \cdot 8,5\ bar/g = 5,2\ bar/g$$

$$BDN\text{-}Z = \frac{18\ t}{18\ t} \cdot 8,5\ bar/g = 8,5\ bar/g$$

$$BDN\text{-}A = \frac{4\ t}{18\ t} \cdot 8,5\ bar/g = 1,9\ bar/g$$

Fall B:

$$kappa = \frac{28\ t}{36\ t} \cdot 8,5\ bar/g = 6,6\ bar/g$$

$$BDN\text{-}Z = \frac{10\ t}{18\ t} \cdot 8,5\ bar/g = 4,7\ bar/g$$

$$BDN\text{-}A = \frac{18\ t}{18\ t} \cdot 8,5\ bar/g = 8,5\ bar/g$$

Es können praktisch sämtliche Beladungszustände der Fahrzeugkombination berücksichtigt werden.

Erfindungsgemäß können hierbei insbesondere Anhängefahrzeuge ohne automatisch lastabhängige Bremsdruckregelung (ALB) geregelt werden; das Verfahren ist jedoch auch für Anhängefahrzeuge mit ALB anwendbar. Hierbei kann insbesondere ein Wechsel zwischen aktivierter und nicht aktivierter ALB-Funktion erfolgen.

Die Fig. 4a-4d zeigen die physikalischen Zusammenhänge bei verschiedenen Beladungszuständen einer Fahrzeugkombination aus einem Zugfahrzeug und einem Anhängefahrzeug mit zwei Achsen, wobei die Größen Achslasten (AL), Summe der Achslasten (SAL-T) für jedes Teilfahrzeug und für die Fahrzeugkombination (SAL-K), das Achslastverhältnis (ALV) des Zugfahrzeugs, der Zuspannenergie-Bezugswert kappa und die Zuspannenergie-Niveaus BDN-Z und BDN-A des Zug- und Anhängefahrzeugs dargestellt sind.

Die Fig. 3a, 3b zeigen im Programm eines elektronisch geregelten Bremssystems (EBS) (nicht dargestellt) einer Fahrzeugkombination abgelegte Kennlinienfelder. Jedes Kennlinienfeld weist eine Parallelschar von Geradenabschnitten auf, die verschiedenen Achslastverhältnissen (ALV) zugeordnet sind und deren Endpunkte ein den jeweiligen Arbeitsbereich der Zuspannenergieregelung bestimmendes Parallelogramm $P_1$, $P_2$ bilden.

Das Zuspannenergie-Niveau (BDN-Z) des Zugfahrzeugs hängt nur von Achslastverhältnis (ALV) und das Zuspannenergie-Niveau (BDN-A) des Anhängefahrzeugs hängt vom Achslastverhältnis (ALV) und vom Zuspannenergie-Bezugswert (kappa) ab, vgl. Fig. 3a, 3b. Bei dem Kennlinienfeld für das Zugfahrzeug verlaufen die Kennlinien für die verschiedenen Achslastverhältnisse parallel zur X-Achse.

Bei einer Fahrzeugkombination mit einem Zugfahrzeug und einem Anhängefahrzeug, die eine elektronisch geregelte Bremsanlage (EBS) mit Fahrzeugverzögerungsregelung und Koppelkraftregelung aufweist, kann bei Vorliegen einer Störgröße eine von der Fahrzeugverzögerungsregelung abhängige Koppelkraftregelung nicht erkennen, was die Ursache für eine verschlechterte oder verbesserte Bremsenperformance ist, insbesondere nicht, ob die Ursache beim Zugfahrzeug oder Anhängefahrzeug zu suchen ist. Die Folge wird sein, dass der Zuspannenergie-Bezugswert kappa steigt oder fällt. Ist diese Änderung von kappa so groß, dass der Arbeitsbereich der Koppelkraftregelung verlassen wird, besteht die Gefahr von gefährlichen Bremszuständen. Diese Gefahr wird durch das erfindungsgemäße Verfahren vermieden.

Es besteht bspw. bei einer Fahrzeugkombination mit einem Zugfahrzeug und einem Anhängefahrzeug im Falle der Beladung nur des Anhängefahrzeuges bei zu heißen Anhängefahrzeugbremsen beim herkömmlichen Koppelkraftregelungsverfahren die Gefahr, dass sich die Bremsleistung des Anhängefahrzeuges verringert, wodurch die Regelung mehr Zuspannenergie einsteuert, wodurch die heißen Bremsen des Anhängefahrzeugs noch heißer werden und sich so die Temperatur und die eingesteuerte Zuspannenergie immer weiter aufschaukeln mit der Gefahr einer wesentlichen Beeinträchtigung oder sogar Ausfalls der Bremsleistung, dadurch, dass durch die Störgröße (hier zu heiße Bremsen) die Bremsleistung des betreffenden Teilfahrzeuges abfällt und zur Kompensierung des Bremsleistungsabfalls mehr Zuspannenergie eingesteuert wird, mit der Folge, dass die Temperatur sich weiter erhöht und letztendlich Zuspannenergie und Temperatur immer weiter steigen.

Um in einem solchen Fall eine einseitige Belastung und damit relative Überlastung des Anhängefahrzeuges, wenn bspw. eine Überladung und/oder heiße Bremsen vorliegen, zu vermeiden, ist das erfindungsgemäße Verfahren nach den Fig. 1 und 2 in Verbindung mit den abgelegten Kennlinienfeldern nach den Fig. 3a und 3b vorgesehen, durch das ein Korrekturfaktor k-BDN-korr zur Bewichtung der ermittelten Zuspannenergie-Sollwerte des Zugfahrzeugs und Anhängefahrzeugs eingeführt wird, falls vorgegebene Zuspannenergie-Niveau-Grenzwerte überschritten werden, d. h. der Koppelkraftregelungs (KKR)-Arbeitsbereich, verlassen wird. Dies soll nachfolgend näher erläutert werden.

Hierbei wird berücksichtigt, dass bei Vorliegen von Störgrößen ein aus der Fahrzeugverzögerungsregelung ermittelter Zuspannenergie-Bezugswert kappa außerhalb der physikalischen Grenzen entsprechend den Parallelogrammen $P_1$, $P_2$ der Fig. 3a, 3b liegt. Wenn der Wert kappa hierbei nach oben über die obere Grenze steigt, ist das Fahrzeug unterbremst, was z. B. durch schlechte oder verölte Bremsen oder durch Temperatureinfluss auftreten kann.

In den Diagrammen nach Fig. 3a, 3b stellen die Rechtekke $R_1$, $R_2$ die Arbeitsbereiche der Fahrzeugverzögerungsregelung bzw. Z-Regelung des Zugfahrzeugs und des Anhängefahrzeugs dar. Die in den Rechtecken liegenden Parallelogramme $P_1$, $P_2$, die die Arbeitsbereiche der KKR darstellen, sind somit gegenüber den Arbeitsbereichen der Z-Regelung eingeschränkt. Die Parallelogramme definieren im Programm der EBS-Anlage abgelegte Kennlinienfelder, die die Abhängigkeit der Zuspannenergie-Niveaus (BDN-Z, BDN-A) des Zugfahrzeugs Z und des Anhängefahrzeugs A vom Zuspannenergie-Bezugswert kappa und vom Achslastverhältnis ALV des Zugfahrzeuges wiedergeben. Jedes Kennlinienfeld weist eine Parallelschar von Geradenabschnitten auf, die den verschiedenen Achslastverhältnissen zugeordnet sind und deren Endpunkte das den jeweiligen Arbeitsbereich der Koppelkraftregelung bestimmende Parallelogramm bilden.

Die Parallelogramme $P_1$, $P_2$ beschreiben durch ihre vier Eckpunkte die Beladungssituationen der Fig. 4a, 4b, 4c, und 4d, die extreme Beladungssituationen darstellen, wobei zulässige Achslasten nicht überschritten werden ( Fig. 4a: Zugfahrzeug (Z) und Anhängefahrzeug (A) leer, Fig. 4b: Z leer, A voll, Fig. 4c: Z voll, A leer und Fig. 4d: Z und A voll), siehe hierzu die Zahlenwerte unter den Figuren 4a-4d. Somit beschreiben die Parallelogramme die Arbeitsbereiche einer Zuspannenergie-Regelung in Zuständen, bei denen keinerlei Störgrößen feststellbar sind, da diese von einer Beladungsänderung nicht trennbar sind, und somit einen Idealzustand, was in der Praxis aber nicht realisierbar ist.

Ursachen für eine schlechtere Bremsenperformance können sein: Überladung eines Teilfahrzeugs oder der Fahrzeugkombination, heiße Radbremsen etc. Problematisch ist, dass eine von der Fahrzeugverzögerungsregelung (Z-Regelung) abhängige Koppelkraftregelung nicht erkennen kann, welches die Ursache für die verminderte Bremsenperformance ist.

Mit dem erfindungsgemäßen Verfahren nach den Fig. 1, 2, 3a, 3b wird daher, wie oben beschrieben, eine Normierung von kappa auf einen zulässigen unteren oder oberen Grenzwert vorgenommen, wobei der so ermittelte Korrekturfaktor erfindungsgemäß für beide Teilfahrzeuge herangezogen wird.

Bei z. B. verölten Bremsen wird der Zuspannenergie-Bezugswert kappa erhöht; bewirkt die Erhöhung keine Verbesserung, wird kappa bis zu seinem oberen Grenzwert kappa-GO erhöht (N6). Wenn kappa aus dem Grenzwert läuft, wird ein Korrekturfaktor k-BDN-korr aus dem sich ergebenden Zuspannenergie-Bezugswert kappa und dem Grenzwert gebildet, und dieser als Bewichtungs-Faktor in die Berechnung des Zuspannenergie-Sollwertes des Zugfahrzeugs bzw. des Anhängers, P-Soll-Z bzw. P-Soll-A, eingefügt, da nicht bekannt ist, in welchem Teilfahrzeug die Ursache für die Grenzüberschreitung liegt. Eine Koppelkraftregelung ist also nur bis zum Erreichen des kappa-Grenzwertes wirksam. Mit seiner Überschreitung wird sie gestoppt. Dann wird der Korrekturfaktor für beide Teilfahrzeuge wirksam, was einer Normierung des Wertes von kappa entspricht. Dieser Grenzwert kann in seiner Abhängigkeit von kappa auch achslastverteilungsabhängig sein.

Das Verfahren nach Fig. 1, 2 und 3a, 3b soll nachfolgend anhand eines Zahlenbeispiels näher erläutert werden, wobei von einem überladenen Fahrzeug ausgegangen werden soll; die Beladungssituation befindet sich also oberhalb der nach Fig. 4d. Trotz der vorliegenden Überladungssituation stellt sich ein Achslastverhältnis von 0,65 ein, da dieser Wert als unterer Grenzwert gesetzt wird. Die sich einstellende Größe kappa aus der Fahrzeugverzögerungsregelung (Z-Regelung) sei mit kappa = 10 bar/g angenommen. Es ergibt sich aus dem Kennfeld gemäß Fig. 3a, 3b kappa-Grenzwert = f(Achslastverhälnis) = f(0,65) = 8,5 und damit

$$\text{k-BDN-korr} = \left( \text{Fehler!} \right) = 1,18$$

Mit diesem Korrekturfaktor k-BDN-korr = 1,18 werden die Zuspannenergie-Sollwerte P-Soll-Z des Zugfahrzeugs und P-Soll-A des Anhängefahrzeugs multipliziert, vgl. Fig. 1, Schritte J4 und J5. Es ergibt sich somit, dass die angenommene Überladungssituation von beiden Teilfahrzeugen gleichermaßen durch vermehrte Bremsarbeit kompensiert werden muss und nicht nur einseitig vom Anhängefahrzeug, wie dies ohne dieses Verfahren der Fall wäre.

Bremsperformance vermindernde Störgrößen, wie zu heiße Bremsen an einem Teilfahrzeug, werden also durch das erfindungsgemäße Verfahren kompensiert, indem ein Korrekturfaktor k-BDN-korr > 1 berechnet wird, so dass die verringerte Bremsperformance beide Teilfahrzeuge zu kompensieren haben.

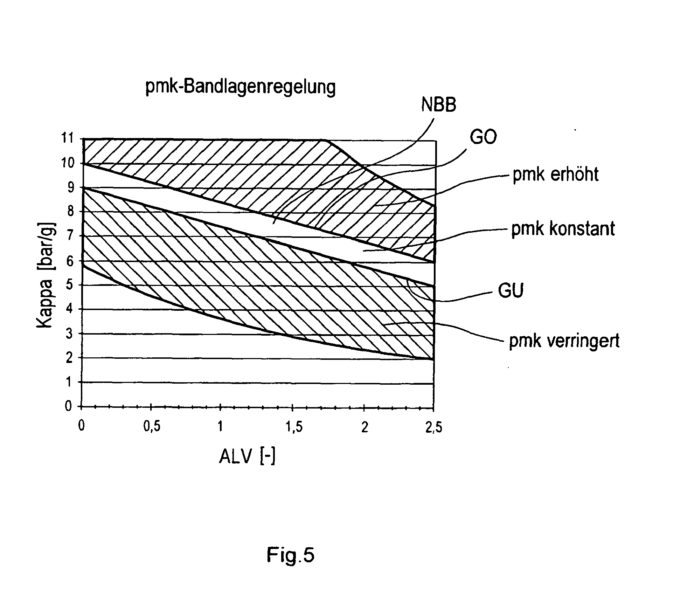

Bei herkömmlichen Verfahren, z. B. gemäß EP 0 697 314 B1, wird bspw. die durch heißere Bremsen des Anhängefahrzeugs gegenüber dem Zugfahrzeug verminderte Gesamtbremsperformance nur über das Anhängefahrzeug ausgeregelt, was zur Folge hat, dass der Temperaturunterschied der Radbremsen zwischen Anhänge- und Zugfahrzeug noch größer wird, vgl. Fig. 5.

Die Fig. 5 zeigt das bekannte Koppelkraftregelungsverfahren z. B. nach der EP 0 697 314 B1. Das durch die Grenzkurven GU und GO eingeschlossene Normalbereichsband NBB und die schraffierten Bereiche bilden den Koppelkraftregelungs-Bereich. Besteht keine Abweichung der Ist-Fahrzeugverzögerung von der gewünschten Soll-Fahrzeugverzögerung, ergibt sich ein kappa-Wert, der innerhalb des Normalbereichsbandes (NBB) liegt, so dass die Koppelkraftregelgröße pmk unverändert bleibt und es keiner Nachregelung bedarf, da das Ziel einer angemessenen Mitwirkung des Anhängefahrzeugs am Abbremsungsvorgang erfüllt ist. Wenn allerdings bei zu geringer oder zu hoher Bremskraft sich durch Änderung von kappa innerhalb des kappa-Regelbereiches die Regelabweichung der Fahrzeugverzögerung durch Nachführung des Gesamtbremsdrukkes des Zugfahrzeuges nicht auf Null bringen lässt und der Wert kappa oberhalb oder unterhalb des NBB liegt, wird dies als ungeeigneter Bremsdruck für das Anhängefahrzeug interpretiert und daraufhin die Koppelkraftregelungsgröße pmk erhöht oder erniedrigt, bis der neu eingestellte Anhängefahrzeug-Bremsdruck zusammen mit einem Gesamtbremsdruck des Zugfahrzeuges, der einem kappa-Wert innerhalb des NBB entspricht, ausreicht, die gewünschte Fahrzeugverzögerung zu erzielen.

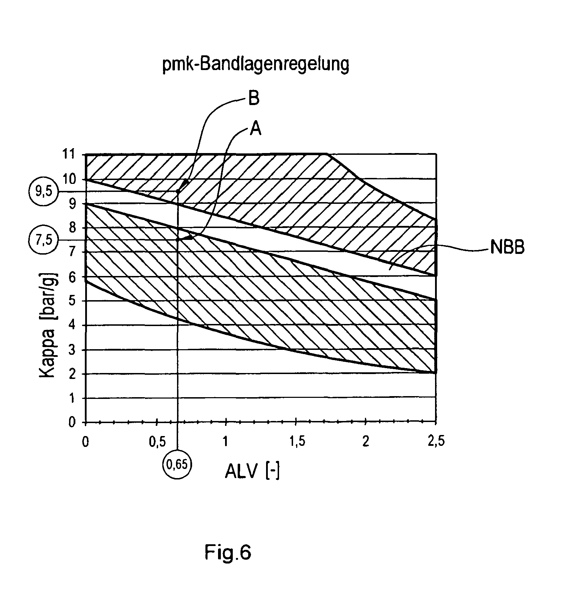

Die Fig. 6 zeigt hierzu zwei Beispiele A und B. Im Fall A beträgt bei einem Achslastverhältnis (ALV) von 0,65 der kappa-Wert = 7,5 bar/g. In diesem Fall wird vom bekannten Verfahren die Koppelkraftregelungsgröße pmk solange verkleinert, bis kappa den für diesen ALV-Wert maßgeblichen kappa-Wert von 8 bar/g erreicht hat, d. h. die untere Bandgrenze des Toleranzfeldes NBB erreicht ist, oder pmk seinen minimalen Wert Null erreicht hat. Im Fall B wird vom bekannten Verfahren pmk solange vergrößert, bis sich ein kappa-Wert von 9 bar/g eingestellt hat, also die obere Grenze des Toleranzfeldes erreicht ist oder der maximale Wert von pmk = 1,0 erreicht ist.

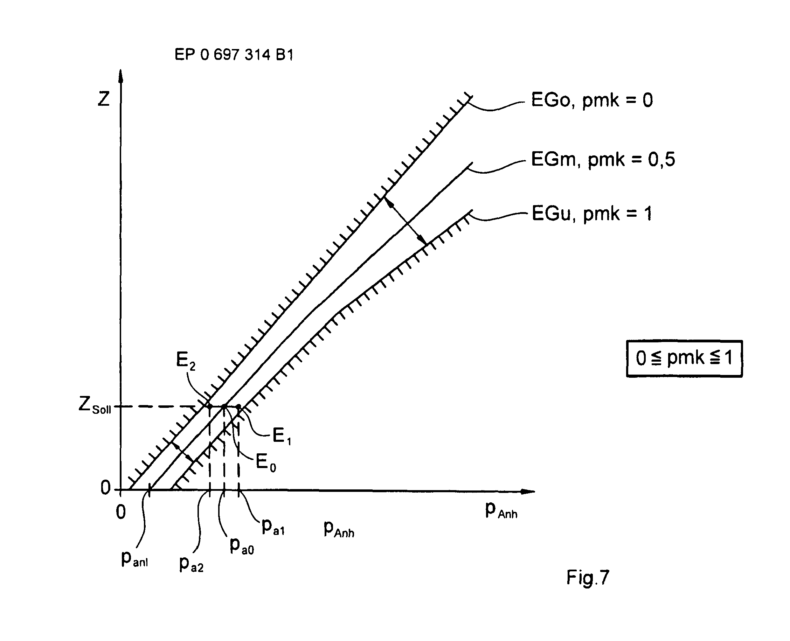

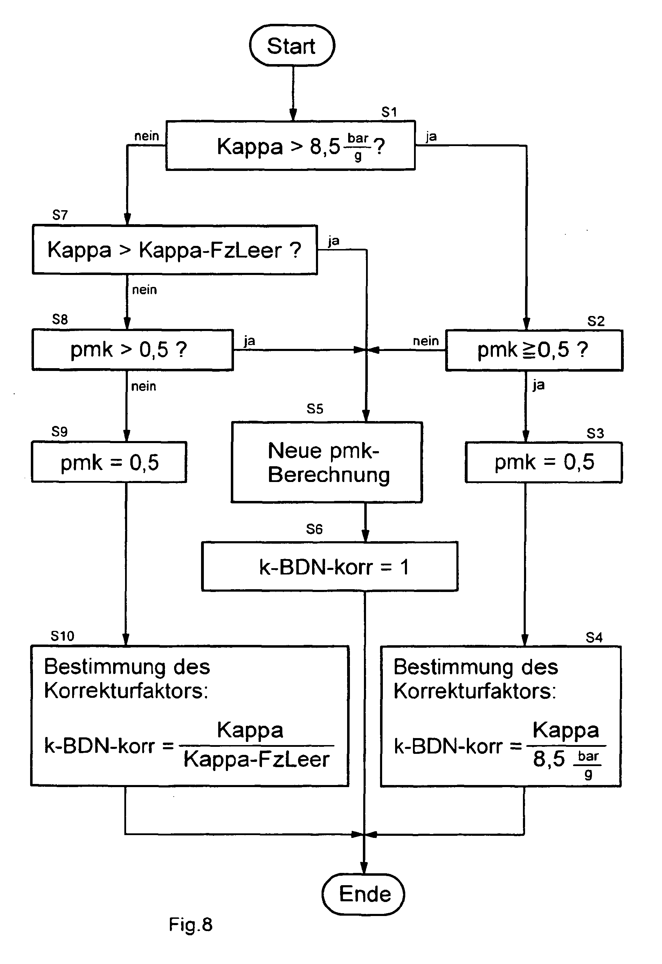

Das anhand der Fig. 5 und 6 beschriebene bekannte Verfahren berücksichtigt nur in geringem Maße Störgrößen durch das Normalbereichsband (NBB). In der Praxis treten aber Störgrößen in größerem Ausmaß auf. Wenn man von dem realistischen Fall ausgeht, dass ein volles Anhängefahrzeug (z. B. ein Auflieger) heiße Bremsen aufweist, ergibt sich, dass kappa über den Wert von 8,5 bar/g hinaus ansteigen wird, bspw. bis 10 bar/g. Hierbei hat die Koppelkraftregelung bei kappa = 9 bar/g begonnen, die Koppelkraftregelgröße pmk zu vergrößern. Die Koppelkraftregelgröße pmk wird solange vergrößert, bis entweder kappa = 9 bar/g erreicht ist oder pmk seinen maximalen Wert von 1,0 erreicht hat. D. h. die Ausregelung der Gesamtbremsperformance erfolgt fast nur über das Anhängefahrzeug durch eine Erhöhung der Größe pmk bis 1, d. h. bis zur Bandobergrenze nach der europäischen ECE-R13-Richtlinie, wodurch der oben ausführlich beschriebene Aufschaukelungseffekt eintritt. Dieser Effekt kann wie oben schon beschrieben durch das erfindungsgemäße Verfahren vermieden werden. Dies soll ergänzend anhand der Fig. 7 und 8 erläutert werden, die sich auf Fahrzeugkombinationen beziehen, deren Anhängefahrzeug (insbesondere Auflieger) eine eigene automatische lastabhängige Bremsfunktion (ALB-Funktion) aufweisen und die das erfindungsgemäße Verfahren in Verbindung mit dem bekannten Koppelkraftregelungs-Verfahren bspw. entsprechend der EP 0 697 314 B1, zeigen. Das Diagramm nach Fig. 7 zeigt die funktionale Abhängigkeit der Verzögerung von der eingesteuerten Zuspannenergie (Bremsdruck) für ein Anhängefahrzeug sowie ein Abbremsungsband, das ebenfalls im Programm der EBS-Anlage abgelegt ist und das von einer oberen Grenzlinie EGo und einer unteren Grenzlinie EGu begrenzt wird. Das dem oben beschriebenen Normalbereichsband NBB entsprechende Abbremsungsband der Fig. 7 entspricht dem vorgeschriebenen Abbremsungsband der europäischen ECE-R13-Richtlinie. Dieses Abbremsungsband gibt für eine gewünschte Verzögerung (z) den jeweils zulässigen Bereich von Anhängerzuspannenergiewerten ($p_{Anh}$) an. Die ebenfalls in der Fig. 7 dargestellte Mittellinie (EGm) des Abbremsungsbandes repräsentiert eine Kennlinie für die zweckmäßigerweise für eine jeweils gewählte Soll-Anhängerverzögerung ($Z_{Soll}$) einzustellende Gesamtzuspannenergie ($p_{a0}$) des Anhängefahr- zeugs. Diese Mittellinie schneidet die Abszisse bei einem endlichen Zuspannenergiewert $p_{anl} > 0$, der eine mittlere Anlegeenergie (Anlegedruck) für den vorliegenden Typ von Anhängefahrzeug darstellt, da erst bei Anhängerzuspannenergien größer als dieser Wert ($p_{anl}$) tatsächlich eine Bremswirkung des Anhängefahrzeugs einsetzt. Zu Beginn eines Bremsvorganges wird über die entsprechende Bremspedalbetätigung eine Soll-Fahrzeugverzögerung $Z_{Soll}$ angefordert, der momentane Beladungszustand erfasst und der Zuspannenergie-Bezugswert kappa ermittelt. Aufgrund des ermittelten Zuspannenergie-Bezugswertes kappa wird die Gesamtzuspannenergie des Zugfahrzeuges eingestellt. Gleichzeitig wird für das Anhängefahrzeug ein Zuspannenergiewert (Druck) $p_{a0}$ (siehe Fig. 7) in die Bremsleitung eines Kupplungskopfes für das Anhängefahrzeug eingesteuert, der, wie in der Fig. 7 dargestellt, für die gewünschte Soll-Fahrzeugverzögerung $Z_{Soll}$ in der Mitte des nach dem Abbremsungsband für das Anhängefahrzeug zulässigen Bereiches, d. h. auf einem auf der Bandmittellinie EGm liegenden Punkt $E_0$ liegt. Ergibt sich eine Abweichung der Ist-Fahrzeugverzögerung von der Soll-Fahrzeugverzögerung und lässt sich diese Regelabweichung durch Nachführung der Gesamtzuspannenergie des Zugfahrzeugs nicht auf Null zurückführen und über- oder unterschreitet der Zuspannenergie-Bezugswert kappa (vgl. Fig. 5) während der Nachregelung das Normalbereichsband, wird dies als ungeeignete Zuspannenergie für das Anhängefahrzeug interpretiert und daraufhin geändert. Überschreitet kappa die Bandgrenze, d. h. den maximal zulässigen Wert, wird dies als zu geringe Bremswirkung des Anhängefahrzeugs interpretiert, woraufhin die Anhänger-Zuspannenergie $p_{Anh}$ vom Anfangswert $p_{a0}$ bis auf einen, einem zugehörigen Punkt $E_1$ innerhalb des Abbremsungsbandes entsprechenden Wert $p_{a1}$ erhöht wird. Diese Erhöhung wird beendet, sobald die neu eingestellte Anhängerzuspannenergie $p_{a1}$ zusammen mit einer Gesamtzuspannenergie im Zugfahrzeug, der einem Zuspannenergie-Bezugswert innerhalb des Normalbereichsintervalls entspricht, ausreicht, die gewünschte Fahrzeugverzögerung zu erzielen. Dabei wird die Erhöhung der Anhängefahrzeug-Zuspannenergie $p_{Anh}$ auf alle Fälle dann beendet, wenn sie den durch die vorgegebene Soll-Fahrzeugverzögerung $Z_{Soll}$ und die untere Abbremsungsbandlinie EGu festgelegten Wert erreicht, so dass ein Verlassen des Abbremsungsbandes verhindert wird. Analog wird verfahren, wenn der Zuspannenergie-Bezugswert kappa die Bandgrenze unterschreitet, was als eine zu starke Abbremsung des Anhängefahrzeuges interpretiert wird. Ausgehend von dem Anfangspunkt $E_0$ auf der Abbremsungsbandmittellinie EGm wird dann die Anhänger-Zuspannenergie $p_{Anh}$ vom Anfangswert $p_{a0}$ entlang der gewählten Soll-Fahrzeugsverzögerung $Z_{Soll}$ entsprechend der Linie bis zu einem Punkt $E_2$ innerhalb des Abbremsungsbandes auf einen Wert $p_{a2}$ verringert, der zur Folge hat, dass sich die gewünschte, gleich große Abbremsung von Zug- und Anhängefahrzeug anschließend wieder über eine Zugfahrzeug-Gesamtzuspannenergie realisieren lässt, der ein innerhalb des Normalbereichsbandes liegender Bezugswert der Zuspannenergie zugeordnet ist. Die Verringerung der Anhängerzuspannenergie wird hierbei auf jeden Fall dann beendet, wenn durch diese adaptive Nachführung die obere Abbremsungsgrenzlinie EGo erreicht wird, um das Verlassen des Abbremsungsbandes zu unterbinden.

In das Diagramm nach Fig. 7 sind zusätzlich Koppelkraft-Regelgrößen pmk mit dem Wertebereich $0 \leq pmk \leq 1$ eingetragen, wobei pmk gleich Null der oberen Bandgrenze EGo, pmk gleich 1 der unteren Bandgrenze EGu und pmk gleich 0,5 der Mittellinie EGm entsprechen. Die Mittellinie entspricht der Linie mit der Bezeichnung "typical nominal demand line" des entsprechenden Diagramms der ECE-R13-Richtlinie.

Die Fig. 8 zeigt ein Flussdiagramm eines Verfahrens zur Bestimmung eines Korrekturfaktors für die Bewichtung der Zuspannenergie-Sollwerte der Teilfahrzeuge einer Fahrzeugkombination - für den Fall, dass das Abbremsungsband verlassen wird. Dieses Verfahren wird angewandt, wenn das Abbremsungsband nach ECE-R13 entsprechend Fig. 7 einzuhalten ist und eine Koppelkraftregelung mit einer Koppelkraftregelgröße pmk, wie vorliegend benannt, erfolgt.

Nach einem Start des Verfahrens wird im Schritt $S_1$ geprüft, ob der durch die Fahrzeugverzögerungsregelung ermittelte Zuspannenergie-Bezugswert kappa größer als ein vorgegebener Definitionswert für kappa, hier 8,5 bar/g für ein voll beladenes Fahrzeug ist. Wenn dies der Fall ist, wird im rechten Zweig des Flussdiagramms im nächsten Schritt $S_2$ geprüft, ob die Koppelkraftregelungsgröße $pmk \geq 0,5$ ist, wenn dies der Fall ist, wird die Koppelkraftregelung über die Koppelkraftregelungsgröße pmk angehalten und wird im Schritt $S_3$ pmk gleich 0,5 gesetzt und nachfolgend wird im Schritt $S_4$ ein Korrekturfaktor k-BDN-korr = kappa/8,5 [bar/g] gebildet, wonach das Verfahren beendet wird. Mit diesem so ermittelten Korrekturfaktor werden dann die ermittelten Zuspannenergie-Sollwerte beider Teilfahrzeuge (Zugfahrzeug und Anhängefahrzeug) bewichtet (multipliziert).

Wenn pmk nicht $\geq 0,5$ ist, erfolgt im Schritt $S_5$ eine neue Berechnung der Koppelkraftregelungsgröße pmk und der Korrekturfaktor k-BDN-korr wird im Schritt $S_6$ gleich 1 gesetzt; danach erfolgt der Sprung auf das Programmende.

Wird im Schritt $S_1$ festgestellt, dass kappa nicht größer als 8,5 bar/g ist, wird im linken Zweig des Flussdiagramms im Schritt $S_7$ geprüft, ob kappa größer als der kappa-Wert für ein leeres Fahrzeug (kappa-$F_{Zleer}$) ist. Wenn dies der Fall ist, werden die Schritte $S_5$ und $S_6$ ausgeführt, d. h. es wird pmk neu berechnet und der Korrekturfaktor auf 1 gesetzt.

Ist dagegen kappa nicht größer als kappa-$F_{Zleer}$, wird im Schritt $S_8$ geprüft, ob pmk > 0,5 ist. Wenn dies der Fall ist, werden wieder die Schritte $S_5$ und S6 ausgeführt mit dem anschließenden Sprung zum Programmende.

Wenn pmk nicht > 0,5 ist, wird im Schritt $S_9$ pmk gleich 0,5 gesetzt und im nachfolgenden Schritt $S_{10}$ ein Korrekturfaktor k-BDN-korr = kappa/kappa-$F_{Zleer}$ gebildet, wonach das Programm beendet wird. Mit diesem Korrekturwert werden dann die Zuspannenergie-Sollwerte des Zugfahrzeugs und des Anhängefahrzeugs bewichtet (multipliziert).

Die Bewichtung der Zuspann-Energie-Sollwerte beider Fahrzeuge mit dem Korrekturfaktor und nicht nur eines Teilfahrzeugs erfolgt deshalb, weil man nicht feststellen kann, in welchem der beiden Teilfahrzeuge die Ursache der durch einen kappa-Wert > 8,5 bar/g verursachten Minderperformance liegt. Es kann nur festgestellt werden, dass eine Minderperformance vorliegt. 8,5 bar/g ist, wie gesagt, vorliegend der definierte kappa-Wert für den vollen Beladungszustand des Fahrzeuges. Steigt also der kappa-Wert über diesen Wert von 8,5 bar/g, weist dies auf eine Performance hin, die schlechter ist als die, die dem vollen Beladungszustand normalerweise entspricht.

Bei Vorliegen von Bremsperformance verbessernden Störgrößen wird das Verfahren sinngemäß angewandt; es wird dann ein Korrekturwert k-BDN-korr < 1 berechnet.

**EP 1 433 681 B1**

**Patentansprüche**

1. Verfahren zur Zuspannenergieregelung einer Fahrzeugkombination, die ein Zugfahrzeug mit mindestens einer Vorder- und Hinterachse und ein Anhängefahrzeug mit mindestens einer Anhängerachse aufweist, wobei wenigstens das Zugfahrzeug ein elektronisch geregeltes Bremssystem aufweist, das eine Fahrzeugverzögerungsregelung und eine Koppelkraftregelung (KKR) durchführt, wobei für die Koppelkraftregelung (KKR) ein innerhalb des Arbeitsbereiches ($R_1$, $R_2$) der Fahrzeugverzögerungsregelung liegender Arbeitsbereich ($P_1$, $P_2$) vorgesehen ist, welcher kleiner ist als der Arbeitsbereich der Fahrzeugverzögerungsregelung und der durch die Funktionswerte einer in einem ordnungsgemäßen Funktionszustand befindlichen Bremsanlage der Fahrzeugkombination bei vorbestimmbaren Beladungszuständen bestimmt ist, **daduch gekennzeichnet**, dass
ein Korrekturfaktor (k-BDN-korr), mit dem ermittelte Zuspannenergiesollwerte für das Zugfahrzeug und das Anhängefahrzeug bewichtet werden, ermittelt wird, wenn ein durch die Fahrzeugverzögerungsregelung ermittelter Zuspannenergie-Bezugswert (kappa) außerhalb des Arbeitsbereiches der Koppelkraftregelung liegt.

2. Verfahren nach Anspruch 1, **dadurch gekennzeichnet, dass** die Koppelkraftregelung gestoppt wird.

3. Verfahren nach Anspruch 2, **dadurch gekennzeichnet, dass** die Koppelkraftregelung gestoppt wird, bevor der Korrekturfaktor (k-BDN-korr) ermittelt wird.

4. Verfahren nach einem der Ansprueche 1 bis 3, **dadurch gekennzeichnet, dass** die Beladungszustände der Fahrzeugkombination extreme Beladungen der Teilfahrzeuge der Fahrzeugkombination und Beladungsverteilungen auf die Teilfahrzeuge sind.

5. Verfahren nach Anspruch 4, **dadurch gekennzeichnet, dass** die extremen Beladungszustände durch volle und leere Teilfahrzeuge und Kombinationen dieser bestimmt sind.

6. Verfahren nach einem der Ansprueche 1 bis 3, **dadurch gekennzeichnet, dass** der Zuspannenergie-Bezugswert (kappa) bei einer Bremsbetätigung aus einem Vergleich eines ermittelten Fahrzeugverzögerungs-Sollwertes ($Z_{soll}$) und eines ermittelten Fahrzeugverzögerungs-Istwertes ($Z_{Ist}$) ermittelt wird.

7. Verfahren nach einem der Ansprueche 1 bis 3, **dadurch gekennzeichnet, dass** die Zuspannenergie-Sollwerte (P-Soll-Z, P-Soll-A) für das Zugfahrzeug (Z) und für das Anhängefahrzeug (A) aus dem Verzögerungs-Sollwert ($Z_{soll}$), einem vom aktuellen Zuspannenergie-Bezugswert (kappa) abhängigen Wert W = f (kappa), einem Zuspannenergie-Niveau (BDN-Z) für das Zugfahrzeug (Z) und einem Zuspannenergie-Niveau (BDN-A) für das Anhängefahrzeug (A) ermittelt werden, unter Verwendung von im Programm der EBS-Anlage abgelegten Kennlinienfeldern, die die Abhängigkeiten der Zuspannenergie-Niveaus (BDN-Z, BDN-A) des Zugfahrzeugs (Z) und des Anhängefahrzeugs (A) vom Zuspannenergie-Bezugswert (kappa) und/oder vom Achslastverhältnis (ALV) des Zugfahrzeugs wiedergeben.

8. Verfahren nach Anspruch 7, **dadurch gekennzeichnet, dass** W = f (kappa) durch Quotientenbildung aus dem aktuellen Zuspannenergie-Bezugswert und einem vorherigen Zuspannenergie-Bezugswert (kappa-alt) gemäß der Formel f (kappa) = (kappa / kappa-alt) ermittelt wird.

9. Verfahren nach Anspruch 7, **dadurch gekennzeichnet, dass** jedes Kennlinienfeld eine Parallelschar von Geradenabschnitten aufweist, die den verschiedenen Achslastverhältnissen (ALV) zugeordnet sind und deren Endpunkte das den jeweiligen Arbeitsbereich der Zuspannenergieregelung bzw. Koppelkraftregelung bestimmende Parallelogramm ($P_1$, $P_2$) bilden.

10. Verfahren nach Anspruch 9, **dadurch gekennzeichnet, dass** die Eckpunkte (a, b, c, d) der Parallelogramme ($P_1$, $P_2$) die vorbestimmbaren oder extremen Beladungszustände wiedergeben.

11. Verfahren nach einem der vorhergehenden Ansprüche, **dadurch gekennzeichnet, dass** bei einer Bremsbetätigung bei Berechnung der Zuspannenergie-Sollwerte für das Zugfahrzeug (P-Soll-Z) und für das Anhängefahrzeug (P-Soll-A) der Korrekturfaktor (k-BDN-korr), mit dem die berechneten Zuspannenergie-Sollwerte bewichtet werden, ermittelt wird, indem ein oberer Grenzwert (kappa-GO) und ein unterer Grenzwert (kappa-GU) des Zuspannenergie-Bezugswertes (kappa) festgesetzt werden, und
in dem Fall, dass der sich ergebende Zuspannenergie-Bezugswert (kappa) den oberen Grenzwert (kappa-GO) übersteigt, der Korrekturfaktor (k-BDN-korr) als Quotient des Zuspannenergie-Bezugswertes (kappa) und des oberen Grenwertes (kappa-GO) ermittelt wird, und
in dem Fall, dass der Zuspannenergie-Bezugswert (kappa) den
unteren Grenzwert (kappa-GU) unterschreitet, der Korrekturfaktor (k-BDN-korr) als Quotient des Zuspannenergie-Bezugswertes (kappa) und des unteren Grenzwertes (kappa-GU) ermittelt wird und
in dem Fall, dass der Zuspannenergie-Bezugswert (kappa) den oberen Grenzwert (kappa-GO) nicht übersteigt und den unteren Grenzwert (kappa-GU) nicht unterschreitet , der Korrekturfaktor (k-BDN-korr) gleich 1 gesetzt wird.

**12.** Verfahren nach Anspruch 11, **dadurch gekennzeichnet, dass** der obere Grenzwert (kappa-GO) dem maximalen Zuspannenergie-Bezugswert des Arbeitsbereiches ($P_1$, P2) und der untere Grenzwert (kappa-GU) dem minimalen Zuspannenergie-Bezugswert des Arbeitsbereiches ($P_1$, P2) entsprechen.

**13.** Verfahren nach einem der vorhergehenden Ansprüche, **dadurch gekennzeichnet, dass** bei einem Verfahren zur Zuspannenergieregelung einer Fahrzeugkombination, bei der das Anhängefahrzeug eine eigene automatisch lastabhängige Brems-Funktion aufweist und ein vorgeschriebenes Abbremsungsband einzuhalten ist und eine KoppelkraftRegelung mit einer Koppelkraft-Regelgröße pmk mit $0 \leq pmk \leq 1$ erfolgt,
zunächst geprüft wird, ob der sich ergebende Zuspannenergie-Bezugswert kappa einen vorgegebenen Definitionswert überschreitet,
in dem Fall, dass kappa den Definitionswert überschreitet und die Regelgröße pmk $\geq 0,5$ ist, pmk gleich 0,5 gesetzt wird und ein Korrekturfaktor (k-BDN-korr) als Quotient des Zuspannenergie-Bezugswertes kappa und des Definitionswertes bestimmt wird, mit dem die berechneten Zuspannenergie-Sollwerte des Zugfahrzeugs und Anhängefahrzeugs bewichtet werden, und
in dem Fall, dass kappa den Definitionswert nicht überschreitet und kappa größer ist als der kappa-Wert (kappa-$F_{Zleer}$) für ein leeres Fahrzeug und pmk nicht größer als 0,5 ist, pmk gleich 0,5 gesetzt wird und ein Korrekturfaktor (k-BDN-korr) als Quotient des Zuspannenergie-Bezugswertes kappa und des Zuspannenergie-Bezugswertes (kappa-$F_{Zleer}$) für ein leeres Fahrzeug bestimmt wird, mit dem die Zuspannenergie-Sollwerte des Zugfahrzeugs und Anhängefahrzeugs bewichtet werden.

**14.** Verfahren nach Anspruch 13, **dadurch gekennzeichnet, dass** in dem Fall, dass der sich ergebende kappa-Wert größer als der Definitionswert aber pmk $\geq 0,5$ ist und in dem Fall, dass der sich ergebende kappa-Wert nicht größer als der Definitionswert, aber größer als der kappa-Wert (kappa-$F_{Zleer}$) für ein leeres Fahrzeug und pmk größer als 0,5 ist, jeweils ein neuer pmk-Wert berechnet wird und der Korrekturfaktor (k-BDN-korr) gleich 1 gesetzt wird.

**15.** Verfahren nach Anspruch 13 oder 14, **dadurch gekennzeichnet, dass** der Definitionswert der kappa-Wert für ein voll beladenes Fahrzeug ist.

**16.** Verfahren nach Anspruch 15, **dadurch gekennzeichnet, dass** der Definitionswert = 8,5 bar/g ist.

**17.** Verfahren nach einem der vorhergehenden Ansprüche, **dadurch gekennzeichnet, dass** das Achslastverhältnis (ALV) aus einem ermittelten Radbremsverhältnis (RBV) und einem ermittelten statischen Druckverhältnis (k-stat) durch Produktbildung ermittelt wird.

**18.** Verfahren nach Anspruch 17, **dadurch gekennzeichnet, dass** das Radbremsverhältnis (RBV) in einer ungebremsten Phase aus einem ermittelten Bremskraftwert (Q-VA) der Vorderachse (VA) und einem ermittelten Bremskraftwert (Q-HA) der Hinterachse (HA) des Zugfahrzeugs durch Quotientenbildung ermittelt wird.

**19.** Verfahren nach Anspruch 17, **dadurch gekennzeichnet, dass** das statische Druckverhältnis (k-stat) aus einer Differenzschlupfregelung (DSR) der EBS-Anlage ermittelt wird.

**20.** Verfahren nach einem der vorhergehenden Ansprüche, **dadurch gekennzeichnet, dass** das Achslastverhältnis (ALV) aus Signalen von Achslastsensoren der Vorderachse und Hinterachse des Zugfahrzeugs ermittelt wird.

**21.** Verfahren nach einem der vorhergehenden Ansprüche, **dadurch gekennzeichnet, dass** das Achslastverhältnis (ALV) aus Signalen von einem oder mehreren nur an der Hinterachse des Zugfahrzeugs vorgesehenen Achslastsensoren ermittelt wird.

**22.** Verfahren nach einem der vorhergehenden Ansprüche, **dadurch gekennzeichnet, dass** anstelle des Achslastverhältnisses (ALV) die Zugfahrzeug-Hinterachslast als Parameter bei der Ermittlung der Zuspannenergie-Niveaus (BDN-Z und BDN-A) für das Zug- und Anhängefahrzeug verwendet wird, d. h. Kennlinienfelder verwendet werden, die die Abhängigkeiten der Zuspannenergie-Niveaus vom Zuspannenergie-Bezugswert (kappa) und/oder von der Zugfahrzeug-Hinterachslast wiedergeben.

**23.** Verfahren nach einem der vorhergehenden Ansprüche, **dadurch gekennzeichnet, dass** das Zuspannenergie-Niveau (BDN-Z) des Zugfahrzeugs (Z) in Abhängigkeit vom Achslastverhältniswert (ALV) oder vom Zuspannenergie-Bezugswert (kappa) oder in Abhängigkeit vom Achslastverhältnis und vom Zuspannenergie-Bezugswert (kappa) ermittelt wird und das Zuspannenergie-Niveau (BDN-A) des Anhängefahrzeugs (A) in Abhängigkeit vom Zuspannenergie-Bezugswert (kappa) oder vom Zuspannenergie-Bezugswert (kappa) und Achslastverhältniswert (ALV) ermittelt wird anhand der abgelegten Kennlinienfelder.

**24.** Verfahren nach einem der vorhergehenden Ansprüche, **dadurch gekennzeichnet, dass** die Zuspannenergie-Niveauwerte (BDN-Z) des Zugfahrzeugs (Z) und (BDN-A) des Anhängefahrzeugs (A) aus dem Zuspannenergie-Bezugswert (kappa) mit dem Achslastverhältnis (ALV) als Parameter mittels linearer oder affiner Gleichungen ermittelt werden.

**25.** Verfahren nach einem der Ansprüche 1-23, **dadurch gekennzeichnet, dass** die Zuspannenergie-Niveauwerte (BDN-Z) des Zugfahrzeugs (Z) und (BDN-A) des Anhängefahrzeugs (A) aus dem Zuspannenergie-Bezugswert (kappa) mit der Hinterachslast des Zugfahrzeugs als Parameter mittels linearer oder affiner Gleichungen ermittelt werden.

**26.** Verfahren nach einem der vorigen Ansprüche, **dadurch gekennzeichnet, dass** in einer ungebremsten Phase die Zuspannenergie-Sollwerte (P-Soll-Z und P-Soll-A) des Zugfahrzeugs (Z) und des Anhängefahrzeugs (A) auf Null gesetzt werden.

**27.** Verfahren nach einem der vorigen Ansprüche, **dadurch gekennzeichnet, dass** ein erster Zuspannenergie-Bezugswert (kappa) aus Fahrdynamikdaten, insbesondere der Motorleistung und Getriebeübersetzung, und einer ermittelten Masse der Fahrzeugkombination ermittelt wird.

**28.** Verfahren nach einem der vorhergehenden Ansprüche, **dadurch gekennzeichnet, dass** der Zuspannenergie-Bezugswert (kappa) bei seiner Berechnung gefiltert wird.

**Claims**

**1.** Method for controlling the brake application energy of a vehicle combination which has a traction vehicle with at least one front axle and one rear axle and a trailer vehicle with at least one trailer axle, wherein at least the traction vehicle has an electronically controlled brake system which carries out a vehicle deceleration control process and a coupling force control process (KKR), wherein, for the coupling force control process (KKR), a working range ($P_1$, $P_2$) which lies within the working range ($R_1$, $R_2$) of the vehicle deceleration control process is provided which is smaller than the working range of the vehicle deceleration control process and which is determined by the functional values of a brake system, in a satisfactory functional state, of the vehicle combination in predeterminable load states, **characterized in that**
a correction factor (k-BDN-korr), with which determined brake application energy setpoint values for the traction vehicle and the trailer vehicle are weighted, is determined if a brake application energy reference value (kappa), which is determined by the vehicle deceleration control process, lies outside the working range of the coupling force control process.

**2.** The method according to Claim 1, **characterized in that** the coupling force control process is stopped.

**3.** Method according to Claim 2, **characterized in that** the coupling force control process is stopped before the correction factor (k-BDN-korr) is determined.

**4.** Method according to one of Claims 1 to 3, **characterized in that** the load states of the vehicle combination are extreme loads of the component vehicles of the vehicle combination and load distributions between the component vehicles.

**5.** Method according to Claim 4, **characterized in that** the extreme load states are determined by full and empty component vehicles and combinations thereof.

6. Method according to one of Claims 1 to 3, **characterized in that** the brake application energy reference value (kappa) is determined during activation of the brakes from a comparison of a determined vehicle deceleration setpoint value ($Z_{setp}$) and a determined vehicle deceleration actual .value ($Z_{act}$).

7. Method according to one of Claims 1 to 3, **characterized in that** the brake application setpoint values (P-setp-Z, P-setp-A) for the traction vehicle (Z) and for the trailer vehicle (A) are determined from the deceleration setpoint value ($Z_{setp}$), a value W = f (kappa) which is dependent on the current brake application energy reference value (kappa), a brake application energy level (BDN-Z) for the traction vehicle (Z) and a brake application energy level (BDN-A) for the trailer vehicle (A), using characteristic curve diagrams which are stored in the program of the EBS system and which represent the dependencies of the brake application energy level (BDN-Z, BDN-A) of the traction vehicle (Z) and of the trailer vehicle (A) on the brake application energy reference value (kappa) and/or on the axle load ratio (ALV) of the traction vehicle.

8. Method according to Claim 7, **characterized in that** W = f (kappa) is determined by quotient formation from the current brake application energy reference value and a previous brake application energy reference value (kappa-old) (according to the formula f (kappa) = (kappa / kappa-old).

9. Method according to Claim 7, **characterized in that** each characteristic curve diagram has a parallel group of straight line sections which are assigned to the various axle load ratios (ALV) and whose end points form the parallelogram ($P_1$, $P_2$) which determines the respective working range of the brake application energy control process or coupling force control process.

10. Method according to Claim 9, **characterized in that** the vertices (a, b, c, d) of the parallelograms ($P_1$, $P_2$) represent the predeterminable or extreme load states.

11. Method according to one of the preceding claims, **characterized in that**, when calculating the brake application energy setpoint values for the traction vehicle (P-setp-Z) and for the trailer vehicle (P-setp-A) when the brakes are being activated, the correction factor (k-BDN-korr) with which the calculated brake application energy setpoint values are weighted is determined by specifying an upper limiting value (kappa-GO) and a lower limiting value (kappa-GU) of the brake application energy reference value (kappa), and in the event of the resulting brake application energy reference value (kappa) exceeding the upper limiting value (kappa-GO), the correction factor (k-BDN-korr) is determined as a quotient of the brake application energy reference value (kappa) and of the upper limiting value (kappa-GO), and in the event of the brake application energy reference value (kappa) dropping below the lower limiting value (kappa-GU), the correction factor (k-BDN-korr) is determined as a quotient of the brake application energy reference value (kappa) and of the lower limiting value (kappa-GU), and in the event of the brake application energy reference value (kappa) not exceeding the upper limiting value (kappa-GO) and not dropping below the lower limiting value (kappa-GU), the correction factor (k-BDN-korr) is set to be equal to 1.

12. Method according to Claim 11, **characterized in that** the upper limiting value (kappa-GO) corresponds to the maximum brake application energy reference value of the working range ($P_1$, $P_2$), and the lower limiting value (kappa-GU) corresponds to the minimum brake application energy reference value of the working range ($P_1$, $P_2$).

13. Method according to one of the preceding claims, **characterized in that** in a method for controlling the brake application energy of a vehicle combination, in which the trailer vehicle has separate automatically load-dependent braking function and a prescribed braking range has to be complied with and a coupling force control process occurs with a coupling force control variable pmk where $0 \leq pmk \leq 1$,
it is first checked whether the resulting brake application energy reference value kappa exceeds a predefined definition value,
in the event of kappa exceeding the definition value and the control variable pmk being $\geq 0.5$, pmk is set to be equal to 0.5 and a correction factor (k-BDN-korr) is determined as a quotient of the brake application energy reference value kappa and of the definition value with which the calculated brake application energy setpoint values of the traction vehicle and trailer vehicle are weighted, and
in the event of kappa not exceeding the definition value and kappa being greater than the kappa value (kappa-$F_{Zleer}$) for an empty vehicle and pmk is not greater than 0.5, pmk is set to be equal to 0.5 and a correction factor (k-BDN-korr) is determined as a quotient of the brake application energy reference value kappa and of the brake application energy reference value (kappa-$F_{Zleer}$) for an empty vehicle with which the brake application energy setpoint values of the traction vehicle and trailer vehicle are weighted.

14. Method according to Claim 13, **characterized in that**, in the event of the resulting kappa value being greater than the definition value but pmk being $\geq 0.5$, and
in the event of the resulting kappa value not being greater than the definition value but being greater than the kappa value (kappa-$F_{Zleer}$) for an empty vehicle and pmk being greater than 0.5, in each case a new pmk value is calculated and the correction factor (k-BDN-korr) is set to be equal to 1.

15. Method according to Claim 13 or 14, **characterized in that** the definition value is the kappa value for a fully laden vehicle.

16. Method according to Claim 15, **characterized in that** the definition value = 8.5 bar/g.

17. Method according to one of the preceding claims, **characterized in that** the axle load ratio (ALV) is determined from a determined wheel brake ratio (RBV) and a determined static pressure ratio (k-stat) by product formation.

18. Method according to Claim 17, **characterized in that** the wheel brake ratio (RBV) is determined in an unbraked phase from a determined braking force value (Q-VA) of the front axle (VA) and a determined braking force value (Q-HA) of the rear axle (HA) of the traction vehicle by quotient formation.

19. Method according to Claim 17, **characterized in that** the static pressure ratio (k-stat) is determined from a difference slip control process (DSR) of the EBS system.

20. Method according to one of the preceding claims, **characterized in that** the axle load ratio (ALV) is determined from signals of axle load sensors on the front axle and rear axle of the traction vehicle.

21. Method according to one of the preceding claims, **characterized in that** the axle load ratio (ALV) is determined from signals from one or more axle load sensors which are provided only on the rear axle of the traction vehicle.

22. Method according to one of the preceding claims, **characterized in that**, instead of the axle load ratio (ALV), the traction vehicle rear axle load is used as a parameter in the determination of the brake application energy level (BDN-Z and BDN-A) for the traction and trailer vehicles, i.e. characteristic curve diagrams are used which represent the dependencies of the brake application energy level on the brake application energy reference value (kappa) and/or on the traction vehicle rear axle load.

23. Method according to one of the preceding claims, **characterized in that** the brake application energy level (BDN-Z) of the traction vehicle (Z) is determined as a function of the axle load ratio value (ALV) or of the brake application energy reference value (kappa) or as a function of the axle load ratio and of the brake application energy reference value (kappa), and the brake application energy level (BDN-A) of the trailer vehicle (A) is determined as a function of the brake application energy reference value (kappa) or of the brake application energy reference value (kappa) and axle load ratio value (ALV), on the basis of the stored characteristic curve diagrams.

24. Method according to one of the preceding claims, **characterized in that** the brake application energy level values (BDN-Z) of the traction vehicle (Z) and (levels BDN-A) of the trailer vehicle (A) are determined from the brake application energy reference value (kappa) with the axle load ratio (ALV) as a parameter by means of linear or affine equations.

25. Method according to one of Claims 1-23, **characterized in that** the brake application energy level values (BDN-Z) of the traction vehicle (Z) and (BDN-A) of the trailer vehicle (A) are determined from the brake application energy reference value (kappa) with the rear axle load of the traction vehicle as a parameter by means of linear or affine equations.

26. Method according to one of the previous claims, **characterized in that** in an unbraked phase the brake application energy setpoint values (P-setp-Z and P-setp-A) of the traction vehicle (Z) and of the trailer vehicle (A) are set to zero.

27. Method according to one of the previous claims, **characterized in that** a first brake application energy reference value (kappa) is determined from vehicle dynamics data, in particular the engine power and gearbox transmission ratio, and from a determined mass of the vehicle combination.

28. Method according to one of the preceding claims, **characterized in that** the brake application energy reference value (kappa) is filtered during its calculation.

**Revendications**

1.  Procédé de régulation de l'énergie d'application du frein d'une combinaison de véhicules, laquelle présente un véhicule tracteur possédant au moins un essieu avant et un essieu arrière ainsi qu'un véhicule remorqué possédant au moins un essieu de remorque, au moins le véhicule tracteur présentant un système de freinage à régulation électronique qui réalise une régulation du ralentissement du véhicule et une régulation de la force d'accouplement (KKR), une plage de fonctionnement (P1, P2) qui se trouve à l'intérieur de la plage de fonctionnement (R1, R2) de la régulation du ralentissement du véhicule étant prévue pour la régulation de la force d'accouplement (KKR), laquelle est plus petite que la plage de fonctionnement de la régulation du ralentissement du véhicule et laquelle est déterminée par les valeurs de fonctionnement d'un équipement de freinage en bon état de fonctionnement de la combinaison de véhicules en présence de conditions de charge à prédéfinir, **caractérisé en ce qu'**un facteur de correction (k-BDN-korr), avec lequel les valeurs de consigne de l'énergie d'application du frein pour le véhicule tracteur et le véhicule remorqué sont pondérées, est déterminé lorsqu'une valeur de référence de l'énergie d'application du frein (kappa) déterminée par la régulation du ralentissement du véhicule se trouve en dehors de la plage de fonctionnement de la régulation de la force d'accouplement.

2.  Procédé selon la revendication 1, **caractérisé en ce que** la régulation de la force d'accouplement est arrêtée.

3.  Procédé selon la revendication 2, **caractérisé en ce que** la régulation de la force d'accouplement est arrêtée avant de déterminer le facteur de correction (k-BDN-korr).

4.  Procédé selon l'une des revendications 1 à 3, **caractérisé en ce que** les conditions de charge de la combinaison de véhicules sont les charges extrêmes des véhicules partiels de la combinaison de véhicules et les distributions de la charge sur les véhicules partiels.

5.  Procédé selon la revendication 4, **caractérisé en ce que** les conditions de charge extrêmes sont définies par les véhicules partiels pleins et vides et par des combinaisons de ceux-ci.

6.  Procédé selon l'une des revendications 1 à 3, **caractérisé en ce que** la valeur de référence de l'énergie d'application du frein (kappa) lors d'un actionnement du frein est déterminée à partir d'une comparaison d'une valeur de consigne déterminée du ralentissement du véhicule ($Z_{soll}$) et d'une valeur réelle déterminée du ralentissement du véhicule ($Z_{ist}$).

7.  Procédé selon l'une des revendications 1 à 3, **caractérisé en ce que** les valeurs de consigne de l'énergie d'application du frein (P-Soll-Z, P-Soll-A) pour le véhicule tracteur (Z) et pour le véhicule remorqué (A) sont déterminées à partir de la valeur de consigne du ralentissement ($Z_{soll}$), d'une valeur W = f (kappa) qui dépend de la valeur de référence de l'énergie d'application du frein (kappa) actuelle, d'un niveau d'énergie d'application du frein (BDN-Z) pour le véhicule tracteur (Z) et d'un niveau d'énergie d'application du frein (BDN-A) pour le véhicule remorqué (A), en utilisant des diagrammes caractéristiques enregistrés dans le programme de l'équipement EBS qui restituent les dépendances du niveau d'énergie d'application du frein (BDN-Z, BDN-A) du véhicule tracteur (Z) et du véhicule remorqué (A) de la valeur de référence de l'énergie d'application du frein (kappa) et/ou du rapport de charge d'essieu (ALV) du véhicule tracteur.

8.  Procédé selon la revendication 7, **caractérisé en ce que** W = f (kappa) est déterminée en calculant le quotient de la valeur de référence de l'énergie d'application du frein actuelle par une valeur de référence de l'énergie d'application du frein précédente (kappa-alt) selon la formule f (kappa) = (kappa / kappa-alt).

9.  Procédé selon la revendication 7, **caractérisé en ce que** chaque diagramme caractéristique présente un système parallèle de portions droites qui sont affectées aux différents rapports de charge d'essieu (ALV) et dont les points finaux forment le parallélogramme (P1, P2) qui définit la plage de fonctionnement correspondante de la régulation de l'énergie d'application du frein ou de la régulation de la force d'accouplement.

10. Procédé selon la revendication 9, **caractérisé en ce que** les coins (a, b, c, d) des parallélogrammes (P1, P2) restituent les conditions de charge à prédéfinir ou extrêmes.

11. Procédé selon l'une des revendications précédentes, **caractérisé en ce que** lors d'un actionnement du frein, lors du calcul des valeurs de consigne de l'énergie d'application du frein pour le véhicule tracteur (P-Soll-Z) et pour le véhicule remorqué (P-Soll-A), le facteur de correction (k-BDN-korr), avec lequel les valeurs de consigne de l'énergie d'application du frein calculées sont pondérées, est déterminé en fixant une valeur limite supérieure (kappa-GO) et une valeur limite inférieure (kappa-GU) de la valeur de référence de l'énergie d'application du frein (kappa) et dans le cas où la valeur de référence de l'énergie d'application du frein (kappa) qui est obtenue dépasse la valeur limite supérieure (kappa-GO), le facteur de correction (k-BDN-korr) est déterminé sous la forme du quotient de la valeur de référence de l'énergie d'application du frein (kappa) par la valeur limite supérieure (kappa-GO) et dans le cas où la valeur de référence de l'énergie d'application du frein (kappa) est inférieure à la valeur limite inférieure (kappa-GU), le facteur de correction (k-BDN-korr) est déterminé sous la forme du quotient de la valeur de référence de l'énergie d'application du frein (kappa) par la valeur limite inférieure (kappa-GU) et dans le cas où la valeur de référence de l'énergie d'application du frein (kappa) ne dépasse pas la valeur limite supérieure (kappa-GO) et n'est pas inférieure à la valeur limite inférieure (kappa-GU), le facteur de correction (k-BDN-korr) est fixé égal à 1.

12. Procédé selon la revendication 11, **caractérisé en ce que** la valeur limite supérieure (kappa-GO) correspond à la valeur de référence de l'énergie d'application du frein maximale de la plage de fonctionnement (P1, P2) et la valeur limite inférieure (kappa-GU) correspond à la valeur de référence de l'énergie d'application du frein minimale de la plage de fonctionnement (P1, P2).

13. Procédé selon l'une des revendications précédentes, **caractérisé en ce que** dans le cas d'un procédé de régulation de l'énergie d'application du frein d'une combinaison de véhicules, dans lequel le véhicule remorqué présente une fonction de freinage en fonction de la charge automatique propre et il faut respecter une bande de freinage prescrite et une régulation de la force d'accouplement est réalisée avec une grandeur de régulation de la force d'accouplement pmk telle que $0 \leq pmk \leq 1$,
un contrôle est tout d'abord effectué pour vérifier si la valeur de référence de l'énergie d'application du frein kappa qui est obtenue dépasse une valeur de définition prédéfinie,
dans le cas où kappa dépasse la valeur de définition et la grandeur de régulation $pmk \geq 0{,}5$, pmk est fixée égale à 0,5 et un facteur de correction (k-BDN-korr) sous la forme du quotient de la valeur de référence de l'énergie d'application du frein kappa par la valeur de définition est déterminé et utilisé pour la pondération des valeurs de consigne de l'énergie d'application du frein calculées du véhicule tracteur et du véhicule remorqué et
dans le cas où kappa ne dépasse pas la valeur de définition et kappa est supérieure à la valeur de kappa (kappa-$F_{zleer}$) pour un véhicule vide et pmk n'est pas supérieure à 0,5, pmk est fixée égale à 0,5 et un facteur de correction (k-BDN-korr) sous la forme du quotient de la valeur de référence de l'énergie d'application du frein kappa par la valeur de référence de l'énergie d'application du frein (kappa-$F_{zleer}$) pour un véhicule vide est déterminé et utilisé pour la pondération des valeurs de consigne de l'énergie d'application du frein du véhicule tracteur et du véhicule remorqué.

14. Procédé selon la revendication 13, **caractérisé en ce que** dans le cas où la valeur de kappa qui est obtenue est supérieure à la valeur de définition, mais $pmk \geq 0{,}5$, et dans le cas où la valeur de kappa qui est obtenue n'est pas supérieure à la valeur de définition, mais supérieure à la valeur de kappa (kappa-$F_{zleer}$) pour un véhicule vide et pmk est supérieure à 0,5, une nouvelle valeur de pmk est à chaque fois calculée et le facteur de correction (k-BDN-korr) est fixé égal à 1.

15. Procédé selon la revendication 13 ou 14, **caractérisé en ce que** la valeur de définition est la valeur de kappa pour un véhicule pleinement chargé.

16. Procédé selon la revendication 15, **caractérisé en ce que** la valeur de définition est égale à 8,5 bar/g.

17. Procédé selon l'une des revendications précédentes, **caractérisé en ce que** le rapport de charge d'essieu (ALV) est déterminé par calcul d'un produit à partir d'un rapport de frein de roue (RBV) déterminé et d'un rapport de pression statique (k-stat) déterminé.

18. Procédé selon la revendication 17, **caractérisé en ce que** le rapport de frein de roue (RBV) dans une phase sans freinage est déterminé par calcul d'un quotient à partir d'une valeur de force de freinage (Q-VA) déterminée de l'essieu avant (VA) et d'une valeur de force de freinage (Q-HA) déterminée de l'essieu arrière (HA) du véhicule tracteur.

19. Procédé selon la revendication 17, **caractérisé en ce que** le rapport de pression statique (k-stat) est déterminé à partir d'une régulation du patinage différentiel (DSR) de l'équipement EBS.

20. Procédé selon l'une des revendications précédentes, **caractérisé en ce que** le rapport de charge d'essieu (ALV) est déterminé à partir de signaux de capteurs de charge d'essieu de l'essieu avant et de l'essieu arrière du véhicule tracteur.

21. Procédé selon l'une des revendications précédentes, **caractérisé en ce que** le rapport de charge d'essieu (ALV) est déterminé à partir de signaux d'un ou plusieurs capteurs de charge d'essieu prévus uniquement sur l'essieu arrière du véhicule tracteur.

22. Procédé selon l'une des revendications précédentes, **caractérisé en ce que** la charge d'essieu arrière du véhicule tracteur est utilisée à la place du rapport de charge d'essieu (ALV) en tant de que paramètre lors de la détermination du niveau d'énergie d'application du frein (BDN-Z, BDN-A) pour le véhicule tracteur et le véhicule remorqué, ce qui veut dire que les diagrammes caractéristiques utilisés restituent les dépendances du niveau d'énergie d'application du frein de la valeur de référence de l'énergie d'application du frein (kappa) et/ou de la charge d'essieu arrière du véhicule tracteur.

23. Procédé selon l'une des revendications précédentes, **caractérisé en ce que** le niveau d'énergie d'application du frein (BDN-Z) du véhicule tracteur (Z) est déterminé en fonction de la valeur du rapport de charge d'essieu (ALV) ou de la valeur de référence de l'énergie d'application du frein (kappa) ou en fonction du rapport de charge d'essieu et de la valeur de référence de l'énergie d'application du frein (kappa) et le niveau d'énergie d'application du frein (BDN-A) du véhicule remorqué (A) est déterminé en fonction de la valeur de référence de l'énergie d'application du frein (kappa) ou de la valeur de référence de l'énergie d'application du frein (kappa) et de la valeur du rapport de charge d'essieu (ALV) au moyen des diagrammes caractéristiques enregistrés.

24. Procédé selon l'une des revendications précédentes, **caractérisé en ce que** les valeurs du niveau d'énergie d'application du frein (BDN-Z) du véhicule tracteur (Z) et (BDN-A) du véhicule remorqué (A) sont déterminées à partir de la valeur de référence de l'énergie d'application du frein (kappa) avec le rapport de charge d'essieu (ALV) comme paramètre au moyen d'équations linéaires ou affines.

25. Procédé selon l'une des revendications 1 à 23, **caractérisé en ce que** les valeurs du niveau d'énergie d'application du frein (BDN-Z) du véhicule tracteur (Z) et (BDN-A) du véhicule remorqué (A) sont déterminées à partir de la valeur de référence de l'énergie d'application du frein (kappa) avec la charge d'essieu arrière du véhicule tracteur comme paramètre au moyen d'équations linéaires ou affines.

26. Procédé selon l'une des revendications précédentes, **caractérisé en ce que** dans une phase sans freinage, les valeurs de consigne de l'énergie d'application du frein (P-Soll-Z, P-Soll-A) du véhicule tracteur (Z) et du véhicule remorqué (A) sont fixées à zéro.

27. Procédé selon l'une des revendications précédentes, **caractérisé en ce qu'**une première valeur de référence de l'énergie d'application du frein (kappa) est déterminée à partir de données dynamiques de conduite, notamment la puissance du moteur et le rapport de démultiplication de la boîte de vitesses, et d'une masse déterminée de la combinaison de véhicules.

28. Procédé selon l'une des revendications précédentes, **caractérisé en ce que** la valeur de référence de l'énergie d'application du frein (kappa) est filtrée lors de son calcul.

Start

nein     Bremspedal betätigt?     ja

**N1**

KAPPA-ALT = KAPPA

**N2**

k-Achslastverhältnis berechnen

**N3**

Bestimmung des Bremsdruckniveaus
des Zugfahrzeuges
BDN-Z

**N4**

Bestimmung des Bremsdruckniveaus
des Anhängefahrzeuges
BDN-A

**N5**

Bestimmung der Grenzwerte für
KAPPA der Koppelkraftregelung
aus der Fig.3a, 3b

KAPPA-Grenzwert-OBEN (Kappa-GO)
= f (Achslastverhältnis)
KAPPA-Grenzwert-UNTEN (Kappa-GU)
= f (Achslastverhältnis)

**N6**

Block 1 ◄— s. Fig.2

**N7**

p-soll-Z = p-soll-A = 0

**J1**

Einlesen der Sollverzögerungsvorgabe
Zsoll

**J2**

Fahrzeugverzögerungsregelung ermittelt
aus dem Zsoll - Zist Vergleich das
Bremsdruckniveau KAPPA

**J3**

Differenzschlupfregelung (DSR) ermittelt
das statische (k-Stat) und das dynamische
(k-dyn) Druckverhältnis. Daraus läßt sich
dann das Gesamtdruckverhältnis DV
berechnen:
$$DV = k\text{-Stat} + k\text{-dyn} \cdot Zsoll$$

**J4**

Berechnung des Solldruckes der HA:

$$p\text{-soll-Z-korr} \sim BDN\text{-}Z \cdot \frac{KAPPA}{KAPPA\text{-}ALT} \cdot Zsoll \cdot K\text{-BDN-Korr}$$

**J5**

Berechnung des Solldruckes des Anhängers:

$$p\text{-soll-A-korr} \sim BDN\text{-}A \cdot \frac{KAPPA}{KAPPA\text{-}ALT} \cdot Zsoll \cdot K\text{-BDN-Korr}$$

Rücksprung

Start

**Fig.1**

# Block 1 zu Ablaufdiagramm Fig.1

N6

N6-1

KAPPA > KAPPA-GO — ja

nein

N6-2

ja — KAPPA < KAPPA-GU

nein

| N6-4 | N6-5 | N6-6 |
|---|---|---|
| k-BDN-korr = $\dfrac{KAPPA}{KAPPA\text{-}GU}$ | Bestimmung des Korrekturfaktors für die Bremsdruckniveaus<br><br>k-BDN-korr = 1 | k-BDN-korr = $\dfrac{KAPPA}{KAPPA\text{-}GO}$ |

N7

Fig.2

Fig.3a

Fig.3b

**d)**

ALV — 0,65     [-]
AL — 7     11     9   9     [t]
S-AL-T — 18     36     18     [t]
8,5   8,5   8,5     [bar/g]
BDN-Z    Kappa    BDN-A
S-AL-K     S-AL-T

**c)**

0,65     [-]
7     11     2   2     [t]
18     22     4     [t]
8,5     5,2     1,9     [bar/g]

**b)**

1,5     [-]
6     4     9   9     [t]
10     28     18     [t]
4,7     6,6     8,5     [bar/g]

**Fig.4**

Z     A

1,5     [-]    Achslastverhältnis (ALV)
6     4     2   2     [t]    Achslasten (Einzelachsen) (AL)
10     14     4     [t]    Summe Achslasten (der Fahrzeuge (-kombination)) (S-AL-T; S-AL-K)
4,7     3,3     1,9     [bar/g]   BDN-Z, KAPPA, BDN-A

**a)**

pmk-Bandlagenregelung

NBB
GO
pmk erhöht
pmk konstant
GU
pmk verringert

Kappa [bar/g]

ALV [-]

Fig.5

pmk-Bandlagenregelung

Fig.6

EP 0 697 314 B1

Fig.7

$0 \leqq pmk \leqq 1$

EP 1 433 681 B1

Start

S1
Kappa > 8,5 $\frac{bar}{g}$ ?

nein | ja

S7
Kappa > Kappa-FzLeer ?

ja

nein

S8
pmk > 0,5 ?

ja | nein

S2
pmk $\geq$ 0,5 ?

ja

nein

S9
pmk = 0,5

S5
Neue pmk-Berechnung

S3
pmk = 0,5

S6
k-BDN-korr = 1

S10
Bestimmung des Korrekturfaktors:

k-BDN-korr = $\dfrac{Kappa}{Kappa\text{-}FzLeer}$

S4
Bestimmung des Korrekturfaktors:

k-BDN-korr = $\dfrac{Kappa}{8,5\ \frac{bar}{g}}$

Ende

Fig.8

EP 1 433 681 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0697314 B1
- EP 0697341 B1
- EP 0445575 B1